(19) Europäisches Patentamt
European Patent Office
Office européen des brevets

(11) EP 1 099 728 B1

(12) EUROPEAN PATENT SPECIFICATION

(45) Date of publication and mention of the grant of the patent:
**12.02.2003 Bulletin 2003/07**

(21) Application number: **99922580.8**

(22) Date of filing: **28.05.1999**

(51) Int Cl.[7]: **C08L 83/10**, C08L 83/06, C08L 101/10, C08K 3/22, C08K 3/34, C08K 3/36

(86) International application number:
**PCT/JP99/02869**

(87) International publication number:
**WO 99/061528 (02.12.1999 Gazette 1999/48)**

# (54) CURABLE COMPOSITION

HÄRTBARE ZUSAMMENSETZUNG

COMPOSITION DURCISSABLE

(84) Designated Contracting States:
**BE DE FR GB**

(30) Priority: **28.05.1998 JP 14781098**
**17.08.1998 JP 23037898**
**30.11.1998 JP 33903098**

(43) Date of publication of application:
**16.05.2001 Bulletin 2001/20**

(73) Proprietor: **KANEKA CORPORATION**
**Osaka-shi, Osaka 530-8288 (JP)**

(72) Inventors:
- **CHIBA, Makoto**
**Kobe-shi, Hyogo 655-0046 (JP)**
- **TAKASE, Junji**
**Akashi-shi, Hyogo 673-0011 (JP)**

(74) Representative: **Hubert, Philippe et al**
**Cabinet Beau de Loménie**
**158, rue de l'Université**
**75340 Paris Cédex 07 (FR)**

(56) References cited:
**EP-A- 0 758 029**
**EP-A- 0 839 872**
**JP-A- 2 185 565**
**JP-A- 10 204 303**
**JP-A- 11 209 639**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 099 728 B1

Printed by Jouve, 75001 PARIS (FR)

## Description

TECHNICAL FIELD

The present invention relates to a curable composition which comprises at least two components and which comprises a saturated hydrocarbon polymer having a silicon-containing group, said silicon-containing group containing a silicon atom-bound hydroxy group or hydrolyzable group and being able to be crosslinked under formation of a siloxane bond.

BACKGROUND ART

Silicon-containing groups having a silicon atom-bound hydrolyzable group and being able to be crosslinked under formation of a siloxane bond, such as a group represented by $-Si(OCH_3)_3$, are well known functional groups. These functional groups are hydrolyzed by moisture in the air, for instance, and react, via $-Si(OH)_3$, for instance, with another reactive silicon group in the manner of silanol condensation to form a siloxane bond (Si-O-Si). In the present specification, such silicon-containing group having a silicon atom-bound hydroxy group or hydrolyzable group and being able to be crosslinked under formation of a siloxane bond is referred to also as reactive silicon group.

$$(CH_3O)_3Si\sim\sim\sim\sim\sim\sim\sim\sim Si(OCH_3)_3 \rightarrow [(HO)_3Si\sim\sim\sim\sim\sim\sim\sim\sim Si(OH)_3]$$

$$\rightarrow (\sim\sim\sim\sim SiO)_3Si\sim\sim\sim\sim\sim\sim\sim\sim Si(OSi\sim\sim\sim\sim)_3$$

In the presence of moisture, reactive silicon group-containing polymers undergo crosslinking to thereby provide cured products even at room temperature. Among such polymers, those polymers whose main chain skeleton is a rubber-based one occur as viscous liquids at room temperature but, when cured, give rubber-like elastomers and, as such, are widely used in sealing compositions for architectural use and those for industrial use. A sealing material, when stuffed into gaps (joints) in walls and other structural members and then allowed to cure, fills up the gaps and provides them with water- and airtightness.

Among such rubber type polymers, saturated hydrocarbon polymers such as polyisobutylene provide cured products having good weathering resistance, heat resistance and gas barrier properties. However, such saturated hydrocarbon polymers not only have remarkable gas barrier properties but also have high moisture barrier properties so that there arises a problem; when they are cured by moisture in the air, it takes a long time, as long as a week or more, for the interior of the filling to cure sufficiently although the curing reaction proceeds relatively fast at the surface. Accordingly, a composition having good core curability has been proposed which contains a metal salt hydrate dispersed therein and can be cured rapidly to the core at room temperature (Japanese Kokai Publication Hei-02-185565).

Further, the present inventors have previously found that a curable composition comprising at least two components can be prepared by using a curing agent prepared by incorporating water or a metal salt hydrate in a silanol condensation catalyst component.

The metal salt hydrate in the above curing agent, however, may cause blocking during storage and, in such case, problems arise in handling in the practice; for example, it is necessary to grind the curing agent prior to use to improve the dispersibility thereof. When water is used in lieu of the metal salt hydrate, problems also arise; for example, a mixing procedure for finely dispersing water into the curing agent may be required and, in that case, a special apparatus for preparation is required.

SUMMARY OF THE INVENTION

The present inventors found that even when a drying agent containing water (namely caused to adsorb water beforehand) is used in lieu of water or metal salt hydrates, silanol condensation catalysts can remain stable as in the prior art and compositions (in particular curing agents) can be prepared (produced) with ease. Based on this finding, the present inventors further found that a curable composition can be prepared which comprises at least two components and in which a curing agent prepared by causing a silanol condensation catalyst to adsorb water in advance is used, and that the above problems can be solved by using this composition.

Thus, the present invention is concerned with a curable composition

which comprises at least two components,

namely (A) a main component comprising a saturated hydrocarbon polymer having at least one silicon-containing group, said silicon-containing group containing a silicon atom-bound hydroxy group or hydrolyzable group and being able to be crosslinked under formation of a siloxane bond,

and (B) a curing agent comprising (b1) a silanol condensation catalyst and (b2) a moisture-containing drying agent other than a metal salt hydrate.

With the composition of the present invention, the above problems can be solved and, in addition, other advantages are produced; the rate of curing resulting from the silanol condensation catalyst is accelerated as compared with the use of water as the moisture source and the composition shows the improved resistance of adhesion to hot water, for instance.

BRIEF DESCRIPTION OF THE DRAWING

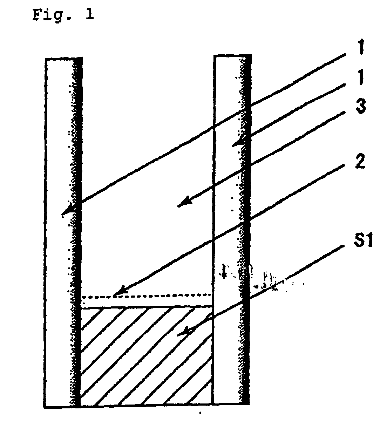

Fig. 1 is a partial schematic representation, in section, of the double glazing obtained in Example 1. In the figure, 1 denotes a glass sheet, 2 a wire net, 3 a gap, and S1 a sealing material.

DETAILED DISCLOSURE OF THE INVENTION

In the following, the present invention is described in detail.

The reactive silicon group-containing saturated hydrocarbon polymer to be used in the practice of the present invention is substantially free of any carbon-carbon unsaturated bond other than an aromatic ring unsaturation and includes, among others, polyethylene, polypropylene, polyisobutylene, hydrogenated polybutadiene and hydrogenated polyisoprene.

As the reactive silicon group, there may be mentioned a group represented by the general formula (1):

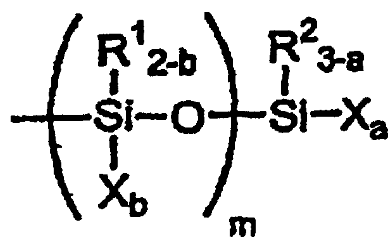

(1)

wherein $R^1$ and $R^2$ each independently is a hydrogen atom, an alkyl group containing 1 to 20 carbon atoms, an aryl group containing 6 to 20 carbon atoms, an aralkyl group containing 7 to 20 carbon atoms or a triorganosiloxy group of the formula $(R')_3SiO$- (in which each R' independently is a substituted or unsubstituted monovalent hydrocarbon group containing 1 to 20 carbon atoms); X is a hydroxy group or hydrolyzable group and when there are a plurality of X's, they may be the same or different; a is 0, 1, 2 or 3 and b is 0, 1 or 2, to the exclusion of the case that a and b are simultaneously 0; and m is an integer of 0 to 19.

The hydrolyzable group includes those groups in conventional use, such as a hydrogen atom, alkoxy groups, acyloxy groups, ketoximato groups, amino groups, amido groups, aminooxy groups, mercapto groups and alkenyloxy groups.

Among these, alkoxy groups, amido groups and aminooxy groups are preferred. Alkoxy groups are particularly preferred because of their mild hydrolyzability and ease of handling.

One to three hydroxy and/or hydrolyzable groups can be bound to each silicon atom and the sum (a + mb) is preferably within the range of 1 to 5. When two or more hydrolyzable groups occur in the reactive silicon group, they may be the same or different.

While at least one silicon atom is necessary for forming a reactive silicon group, the number of silicon atoms is preferably not more than 20.

In particular, reactive silicon groups represented by the general formula (2):

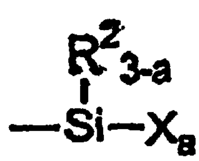

(2)

wherein $R^2$, X and a are as defined above, are preferred because of ready availability.

The number of reactive silicon groups in one molecule of the saturated hydrocarbon polymer is, on average,

not less than 1, preferably 1.1 to 5, more preferably 1.5 to 2.5. The number of reactive silicon groups per molecule is less than 1 on average, the curability will be insufficient, hence good rubber elasticity may not be obtained. When the above number exceeds 5, the cured products may be brittle in some instances.

The reactive silicon group may occur terminally or internally, or terminally and internally, in the saturated hydrocarbon polymer molecular chain. The reactive silicon group occurring at a molecular terminus is particularly preferred because the effective network chain size of the saturated hydrocarbon polymer contained in finally formed cured products increases and therefore high-strength, high-elongation rubber-like cured products can readily be obtained.

Such reactive silicon group-containing saturated hydrocarbon polymers may be used singly or two or more of them may be used in combination.

The polymer constituting the skeleton of the reactive silicon group-containing saturated hydrocarbon polymer to be used in the practice of the invention can be prepared by (1) polymerizing an olefinic compound containing 1 to 6 carbon atoms, such as ethylene, propylene, 1-butene and isobutylene, as the main monomer or (2) homopolymerizing a diene compound such as butadiene and isoprene, or copolymerizing such a diene with such an olefinic compound as mentioned above, and then hydrogenating the (co)polymer obtained. Isobutylene-based polymers and hydrogenated polybutadiene polymers are preferred, among others, in view of ease of terminal functional group introduction, ease of molecular weight control and possibility of the number of terminal functional groups being increased.

The isobutylene-based polymer to be used in the practice of the invention has an isobutylene unit content of not less than 50% by weight based on all monomer units in the main chain skeleton. The isobutylene-based polymer may be one in which all monomer units are isobutylene units or one which contains one or more monomers copolymerizable with isobutylene in an amount of less than 50% (by weight; hereinafter the same shall apply), preferably not more than 30%, more preferably not more than 10%, of the isobutylene-based polymer.

As such monomer components, there may be mentioned olefins containing 4 to 12 carbon atoms, vinyl ethers, aromatic vinyl compounds, vinylsilanes and allylsilanes. As specific examples of such comonomers, there may be mentioned, among others, 1-butene, 2-butene, 2-methyl-1-butene, 3-methyl-1-butene, pentene, 4-methyl-1-pentene, hexene, vinylcyclohexene, methyl vinyl ether, ethyl vinyl ether, isobutyl vinyl ether, styrene, α-methylstyrene, dimethylstyrene, monochlorostyrene, dichlorostyrene, β-pinene, indene, vinyltrichlorosilane, vinylmethyldichlorosilane, vinyldimethylchlorosilane, vinyldimethylmethoxysilane, vinyltrimethylsilane, divinyldichlorosilane, divinyldimethoxysilane, divinyldimethylsilane, 1,3-divinyl-1,1,3,3-tetramethyldisiloxane, trivinylmethylsilane, tetravinylsilane, allyltrichlorosilane, allylmethyldichlorosilane, allyldimethylchlorosilane, allyldimethylmethoxysilane, allyltrimethylsilane, diallyldichlorosilane, diallyldimethoxysilane, diallyldimethylsilane, γ-methacryloyloxypropyltrimethoxysilane and γ-methacryloyloxypropylmethyldimethoxysilane.

The use of a vinylsilane or allylsilane as the monomer copolymerizable with isobutylene results in an increase in silyl group content, hence in an increase in the number of groups capable of functioning as silane coupling agents, leading to an improvement in adhesiveness of the composition finally obtained.

In the case of hydrogenated polybutadiene polymers and other saturated hydrocarbon polymers as well, they may contain units of another monomer or other monomers in addition to the main constituent monomer units, as in the case of the above isobutylene-based polymers.

Further, so long as the objects of the present invention can be accomplished, the reactive silicon group-containing saturated hydrocarbon polymer to be used in the practice of the invention may contain a small amount, preferably not more than 10%, more preferably not more than 5%, most preferably not more than 1%, of monomer units retaining a double bond after polymerization, for example units derived from a polyene compound such as butadiene and isoprene.

It is preferred that the saturated hydrocarbon polymer, preferably an isobutylene-based polymer or hydrogenated polybutadiene polymer, has a number average molecular weight of about 500 to 30,000, more preferably about 1,000 to 15,000, so that it may occur as a liquid or have flowability, from the viewpoint of ease of handling.

A method of producing the reactive silicon group-containing saturated hydrocarbon polymer is now described.

Among reactive silicon group-containing isobutylene-based polymers, isobutylene-based polymers having at least one reactive silicon group at a molecular chain terminus can be produced by using a terminal functional group-containing polymer, preferably an isobutylene-based polymer having a functional group at all termini, obtained by the so-called Inifer polymerization method (cationic polymerization method using a specific compound called Inifer which can serve as an initiator and as a chain transfer agent simultaneously). For example, a reactive silicon group can be introduced into the above polymer by the steps of ① preparing terminal unsaturated group-containing polyisobutylene by hydrogen halide elimination of the above polymer, or by such method of unsaturated group introduction into a polymer as described in Japanese Kokai Publication Sho-63-105005, and then ② subjecting a hydrosilane compound represented by the general formula:

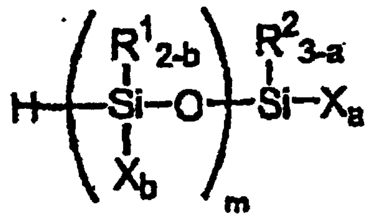

wherein $R^1$, $R^2$, X, a, b and m are as defined above (this compound corresponds to a compound resulting from binding of a hydrogen atom to a group represented by the general formula (1)), preferably a hydrosilane compound represented by the general formula:

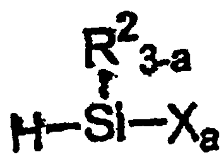

wherein $R^2$, X and a are as defined above,
to addition reaction, namely hydrosilylation, to introduce the same into the polymer, using a platinum catalyst.

The hydrosilane compound includes, but is not limited to, halogenated silanes such as trichlorosilane, methyldichlorosilane, dimethylchlorosilane and phenyldichlorosilane; alkoxysilanes such as trimethoxysilane, triethoxysilane, methyldiethoxysilane, methyldimethoxysilane and phenyldimethoxysilane; acyloxysilanes such as methyldiacetoxysilane and phenyldiacetoxysilane; and ketoximatosilanes such as bis(dimethylketoximato)methylsilane and bis (cyclohexylketoximato)methylsilane, among others. Particularly preferred as the hydrosilane compound are halogenated silanes and alkoxysilanes, however.

Such production method is described, for example, in Japanese Kokoku Publication Hei-04-69659, Japanese Kokoku Publication Hei-07-108928, Japanese Kokai Publication Sho-63-254149, Japanese Kokai Publication Sho-64-22904 and Japanese Kokai Publication Sho-64-38407, for instance.

Isobutylene-based polymers having at least one reactive silicon group internally in the molecular chain are produced by adding a reactive silicon group-containing vinylsilane or allylsilane to an isobutylene-based monomer and effecting copolymerization thereof.

Further, isobutylene-based polymers having reactive silicon groups terminally and internally in the molecular chain are produced by copolymerizing, in producing an isobutylene-based polymer by polymerization, the main component monomeric isobutylene with a reactive silicon group-containing vinylsilane or allylsilane and thereafter introducing a reactive silicon group terminally thereinto.

As the reactive silicon group-containing vinylsilane or allylsilane, there may be mentioned, among others, vinyltrichlorosilane, vinylmethyldichlorosilane, vinyldimethylchlorosilane, vinyldimethylmethoxysilane, divinyldichlorosilane, divinyldimethoxysilane, allyltrichlorosilane, allylmethyldichlorosilane, allyldimethylchlorosilane, allyldimethylmethoxysilane, diallyldichlorosilane, diallyldimethoxysilane, γ-methacryloyloxypropyltrimethoxysilane and γ-methacryloyloxypropylmethyldimethoxysilane.

The above-mentioned hydrogenated polybutadiene polymer having a terminal olefinic group (hereinafter, also referred to as terminal olefin-containing hydrogenated polybutadiene polymer) is produced by first converting the hydroxy group of a hydroxy-terminated hydrogenated polybutadiene polymer to an oxymetal group such as -ONa and -OK and then reacting this with an organic halogen compound represented by the general formula (3):

$$CH_2=CH-R^3-Y \qquad (3)$$

wherein Y is a halogen atom, such as a chlorine and iodine atom, $R^3$ is a divalent organic group represented by $-R^4-$, $-R^4-OCO-$ or $-R^4-CO-$ ($R^4$ being a divalent hydrocarbon group containing 1 to 20 carbon atoms, preferably an alkylene, cycloalkylene, arylene or aralkylene group, in particular a divalent group selected from among $-CH_2-$, $-R^5-C_6H_5-CH_2-$ ($R^5$ being a hydrocarbon group containing 1 to 10 carbon atoms)).

The method of converting the terminal hydroxy group of the hydroxy-terminated hydrogenated polybutadiene polymer to an oxymetal group comprises, for example, reacting the polymer with an alkali metal such as Na and K; a

metal hydride such as NaH; a metal alkoxide such as $NaOCH_3$; or an alkali hydroxide such as NaOH and KOH.

The above method gives a terminal olefin-containing hydrogenated polybutadiene polymer having almost the same molecular weight as the hydroxy-terminated hydrogenated polybutadiene polymer used as the starting material. When a polymer having a higher molecular weight, the molecular weight can be increased by reacting a polyvalent organic halogen compound containing at least two halogen atoms per molecule, such as methylene chloride, bis(chloromethyl)benzene and bis (chloromethyl) ether, with the polymer before reacting with the organic halogen compound of the general formula (3). A terminal olefin-containing hydrogenated polybutadiene polymer having an increased molecular weight can be obtained by the reaction with the organic halogen compound of the general formula (3).

A specific example of the above organic halogen compound of the general formula (3) includes, but is not limited to, allyl chloride, allyl bromide, vinyl(chloromethyl)benzene, allyl(chloromethyl)benzene, allyl(bromomethyl)benzene, allyl chloromethyl ether, allyl(chloromethoxy)benzene, 1-butenyl chloromethyl ether, 1-hexenyl(chloromethoxy) benzene and allyloxy(chloromethyl)benzene, among others. Among these, allyl chloride is inexpensive and readily reactive, hence is preferred.

The reactive silicon group can be introduced into the above terminal olefin-containing hydrogenated polybutadiene polymer by causing a hydrosilane compound to add thereto using a platinum catalyst, like in the case of isobutylene-based polymers having a reactive silicon group at a molecular chain terminus.

When the reactive silicon group-containing saturated hydrocarbon polymer is substantially free of any unsaturated bond other than aromatic ring unsaturated bonds, as mentioned above, markedly improved weathering resistance can be obtained as compared with the cured products based on the conventional rubber-like polymers such as unsaturated bond-containing organic polymers and oxyalkylene-based polymers. Since the above polymer is a hydrocarbon polymer, it has good moisture barrier properties and water resistance and shows good adhesiveness against various inorganic substrates such as glass and aluminum, and gives cured products having good moisture barrier properties.

The content of the reactive silicon group-containing saturated hydrocarbon polymer in the whole curable composition of the present invention is preferably not less than 10%, more preferably not less than 20%, most preferably not less than 30%.

The silanol condensation catalyst (b1), one of the component (B) according to the present invention is per se known in the art. As specific examples thereof, there may be mentioned, among others, titanate esters such as tetrabutyl titanate, tetrapropyl titanate; tin carboxylates such as dibutyltin dilaurate, dibutyltin diacetate, dibutyltin diethylhexanolate, dibutyltin dioctoate, dibutyltin di(methyl maleate), dibutyltin di(ethyl maleate), dibutyltin di(butyl maleate), dibutyltin di(isooctyl maleate), dibutyltin di(tridecyl maleate), dibutyltin di(benzyl maleate), dibutyltin maleate, dibutyltin diacetate, stannous octoate, dioctyltin distearate, dioctyltin dilaurate, dioctyltin di(ethyl maleate), dioctyltin di(isooctyl maleate), dioctyltin diversatate and stannous naphthenate; tin alkoxides such as dibutyltin dimethoxide, dibutyltin diphenoxide and dibutyltin diisopropoxidel, tin oxides such as dibutyltin oxide and dioctyltin oxide, reaction products from dibutyltin oxide and phthalate esters; dibutyltin bisacetylacetonate; organoaluminum compounds such as aluminum trisacetylacetonate, aluminum tris(ethyl acetoacetate) and diisopropoxyaluminum ethyl acetoacetate; chelate compounds such as zirconium tetraacetylacetonate and titanium tetraacetylacetonate; lead octylate; amine compounds such as butylamine, octylamine, laurylamine, dibutylamine, monoethanolamine, diethanolamine, triethanolamine, diethylenetriamine, triethylenetetramine, oleylamine, cyclohexylamine, benzylamine, diethylaminopropylamine, xylylenediamine, triethylenediamine, guanidine, diphenylguanidine, 2,4,6-tris(dimethylaminomethyl)phenol, morpholine, N-methylmorpholine, 2-ethyl-4-methylimidazole and 1,8-diazabicyclo[5.4.0]undecene-7 (DBU) and carboxylate salts of these amine compounds; low-molecular-weight polyamide resins obtained from a polyamine in excess and a polybasic acid; reaction products from a polyamine in excess and an epoxy compound; amino-containing silane coupling agents such as γ-aminopropyltrimethoxysilane and N-(β-aminoethyl)aminopropylmethyldimethoxysilane; and like silanol condensation catalysts and, further, other known acidic or basic silanol condensation catalysts.

Among these catalysts, tetravalent tin compounds, in particular dialkyltin dialkoxides are preferred when rapid curing at room temperature is desired; in particular, dibutyltin bisacetylacetonate, dibutyltin dimethoxide and dibutyltin dipropoxide are preferred. Tetravalent tin compounds, such as dialkyltin dialkoxides, will not show a decrease in their activity as curing agents even when blended with water or metal salt hydrates, nor bring about the decrease in rate of cure even after storage. Therefore, when tetravalent tin compounds are used as curing catalysts, the effects of the present invention are produced markedly.

These catalysts may be used singly or two or more of them may be used combinedly.

The addition amount of this silanol curing catalyst (b1) in component (B) is preferably about 0.1 to 20 parts (parts by weight; hereinafter the same shall apply), more preferably about 1 to 10 parts, per 100 parts of the saturated hydrocarbon polymer in component (A). When the silanol curing catalyst is used in an amount below the above range, the rate of cure may be late and the curing reaction may not proceed to a sufficient extent in some instances. When, on the other hand, the silanol curing catalyst is used in an amount exceeding the above range, local heat generation or foaming may occur in the step of curing, making it difficult to obtain good cured products and, further, the pot life

may be shortened. This is unfavorable from the workability viewpoint as well.

The moisture-containing drying agent (b2) other than a metal salt hydrate in the component (B) according to the present invention serves as a source of supply of moisture required in the condensation reaction of the saturated hydrocarbon polymer in component (A) to thereby promote the formation of crosslinks and further serves as a drying agent for drying the gas (air) within the double glazing inside when the composition of the present invention is used as a sealing agent for single sealing in the manufacture of double glazing.

As typical examples of the drying agent (b1) other than a metal salt hydrate, there may be mentioned, among others, zeolite, silica gel, alumino-silica gel and (activated) alumina. A physical drying agent, namely a drying agent reversibly causing adsorption and release of water, is particularly preferred as the source of moisture in the practice of the present invention and such a drying agent is not limited to those specifically mentioned above.

A wide variety of zeolite species commercially available in the market can generally be used and there may be mentioned, for example, moisture-containing alkali metal or alkaline earth metal aluminosilicates (the metal being Na, K or Ca, for instance). While zeolite includes natural products such as sand-form glauconite, namely green sand as well, synthetic zeolite species (trademark: molecular sieves) can generally and judiciously be used since they have a uniform pore size. As for silica gel, which is noncrystalline silicic acid, a wide variety of natural products as well as synthetic products can be used; they are represented by the composition formula $SiO_2 \cdot xH_2O$. Like zeolite, silica gel, when heated to a high temperature, releases water adsorbed thereon, hence can be used repeatedly.

Alumino-silica gel is a noncrystalline gel represented by the composition formula $Al_2O_3 \cdot xSiO_2 \cdot yH_2O+Al(OH)_3$ and has both the functions of silica and alumina and, as for moisture absorption characteristics, it serves as alumina gel or synthetic zeolite under low humidity conditions and, under high humidity conditions, it serves as silica gel. Further, it can be mixed and molded with a certain kind of active carbon.

Alumina generally indicates alpha crystal alumina which occurs as colorless crystals represented by the composition formula $Al_2O_3$. Active alumina is a transition state form of alumina and contains several percent of water of crystallization. It has a surface area of 400 $m^2$/g, which is comparable to that of silica gel, and therefore can be used as a source of water in the step of curing.

Among the drying agents mentioned above, synthetic zeolite species (molecular sieves) are preferred. Specifically, they are basically represented by the fundamental formula $Me_2/nO \cdot Al_2O_3 \cdot xSiO_2 \cdot yH_2O$ and there are such species as 4A, 5A, 13X and so forth differing in pore size. More specifically, there may be mentioned, among others, molecular sieve 3A, molecular sieve 4A ($0.99Na_2O \cdot 1.0Al_2O_3 \cdot 1.85SiO_2 \cdot 2.51H_2O$), molecular sieve 5A (Ca substituting for part of Na in molecular sieve 4A), molecular sieve 13X ($0.9Na_2O \cdot 1.0Al_2O_3 \cdot 2.5SiO_2 \cdot 6.1H_2O$) and so on.

The amount of moisture contained in the drying agent to be used according to the present invention is preferably within the range of 0.01 to 25 parts, more preferably 0.05 to 15 parts, still more preferably 0.2 to 5 parts, per 100 parts of the reactive silicon group-containing saturated hydrocarbon polymer.

The drying agent to be used according to the present invention is used preferably in an amount within the range of 0.01 to 500 parts per 100 parts of the reactive silicon group-containing saturated hydrocarbon polymer. In particular, in using the composition of the present invention for singly sealing, the drying agent is used preferably in an amount of 1 to 100 parts, more preferably 1 to 50 parts. Those drying agents mentioned above may be used singly or two or more of them may be used in admixture.

In cases that the amount of water adsorbed on the drying agent reaches a point of saturation within the above range, the point becomes the upper limit to the moisture content in the drying agent.

Various additives may be used combinedly in the curable composition of the present invention. A typical additive is an adhesion promoter. As typical examples thereof, there may be mentioned silane coupling agents. It is of course possible to use other adhesion promoters than silane coupling agents. A silane coupling agent comprises (a) silicon-containing group having a hydrolyzable group bound to a silicon atom and (b) at least one group selected from the group consisting of primary amino groups, secondary amino groups, tertiary amino groups, an epoxy group, an isocyanato group, and an isocyanurate group. Here, as examples of the silicon-containing group capable of being crosslinked under formation of a siloxane bond, there may be mentioned those groups represented by the general formula (1), preferably the general formula (2), given hereinabove. As the hydrolyzable group, there may be mentioned those already specifically mentioned hereinabove, and methoxy, ethoxy and the like are preferred from the viewpoint of rapid rate of hydrolysis. The number of hydrolyzable groups is preferably not less than 2, in particular not less than 3.

As other functional groups other than the hydrolyzable silyl group, there may be mentioned, for example, primary, secondary or tertiary amino groups, a mercapto group, an epoxy group, a carboxyl group, a vinyl group, an isocyanato group, an isocyanurate group and halogen atoms.

Among these, primary, secondary or tertiary amino groups, an epoxy group, an isocyanato group and an isocyanurate group are preferred, and an isocyanato group and an epoxy group are particularly preferred.

As specific examples of the silane coupling agent, there may be mentioned amino-containing silanes such as γ-aminopropyltrimethoxysilane, γ-aminopropyltriethoxysilane, γ-aminopropylmethyldimethoxysilane, γ-(2-aminoethyl)aminopropyltrimethoxysilane, γ-(2-aminoethyl)aminopropylmethyldimethoxysilane, γ-(2-aminoethyl)aminopropyltriethoxysilane, γ-(2-aminoethyl)aminopropyltriethoxysilane, γ-ureidopropylpropyltrimethoxysilane, N-β-(N-vinylbenzylaminoethyl)-γ-aminopropyltriethoxysilane and γ-anilinopropyltrimethoxysilane; mercapto-containing silanes such as γ-mercaptopropyltrimethoxysilane, γ-mercaptopropyltriethoxysilane, γ-mercaptopropylmethyldimethoxysilane and γ-mercaptopropylmethyldiethoxysilane; epoxy-containing silanes such as γ-glycidoxypropyltrimethoxysilane, γ-glycidoxypropyltriethoxysilane, γ-glycidoxypropylmethyldimethoxysilane and β-(3,4-epoxycyclohexyl)ethyltriethoxysilane; carboxysilanes such as β-carboxyethyltriethoxysilane, β-carboxyethylphenylbis(2-methoxyethoxy)silane and N-β-(N-carboxymethylaminoethyl)-γ-aminopropyltrimethoxysilane; vinyl type unsaturated group-containing silanes such as vinyltrimethoxysilane, vinyltriethoxysilane, γ-methacryloyloxypropylmethyldimethoxysilane and γ-acryloyloxypropylmethyltriethoxysilane; halogen-containing silanes such as γ-chloropropyltrimethoxysilane; isocyanurate silanes such as tris (trimethoxysilyl) isocyanurate; isocyanato-containing silanes such as γ-isocyanatopropyltrimethoxysilane and γ-isocyanatopropyltriethoxysilane; and so forth.

Modification derivatives of these may also be used as silane coupling agents, for example amino-modified silyl polymers, silylated amino polymers, unsaturated aminosilane complexes, blocked isocyanatosilanes, phenylamino-long chain alkylsilanes, aminosilylated silicones, silylated polyesters and the like.

When added to the component (A) of the composition of the present invention, such silane coupling agents can stably exist, although they readily undergo hydrolysis in the presence of moisture or water.

It is of course possible to use compounds having an epoxy group or isocyanato group within the molecule (inclusive of isocyanate polymers) as adhesion promoters other than silane coupling agents.

In the practice of the present invention, the adhesion promoter is used in an amount of 0.01 to 20 parts (parts by weight; hereinafter the same shall apply) per 100 parts of the reactive silicon-containing saturated hydrocarbon polymer. The particularly preferred range is 0.1 to 10 parts. The above adhesion promoter may comprise a single species or two or more species used in combination.

The characteristics of the composition of the invention may further be improved by incorporating one or more of various fillers. Usable as such fillers are reinforcing fillers such as fumed silica, precipitated silica, silicic anhydride, hydrous silicic acid, talc and carbon black; such fillers as ground calcium carbonate, precipitated calcium carbonate, diatomaceous earth, calcined clay, clay, titanium oxide, bentonite, organic bentonite, ferric oxide, zinc oxide and activated zinc white; and fibrous fillers such as glass fiber and filaments.

For obtaining high-strength curable compositions using these fillers, reinforcing fillers, such as fumed silica, precipitated silica, silicic anhydride, hydrous silicic acid, talc and carbon black, are mainly used in an amount of 1 to 100 parts by weight per 100 parts by weight of the saturated hydrocarbon polymer in the component (A) according to the present invention, whereby, as far as mechanical characteristics are concerned, high-strength, high-modulus cured products can be obtained. When, on the contrary, low-modulus, high-elongation cured products are desired, such fillers as ground calcium carbonate, precipitated calcium carbonate, diatomaceous earth, calcined clay, clay, titanium oxide, bentonite, organic bentonite, ferric oxide, zinc oxide and activated zinc white can be used in an amount of 5 to 400 parts by weight per 100 parts by weight of the saturated hydrocarbon polymer in the component (A) according to the present invention. These fillers may of course be used either alone or in combination as a mixture of two or more of them. The filler may be added to the component (A) or component (B) or to both.

By using a plasticizer combinedly with a filler, it is possible to increase in the elongation of the cured products and/or to incorporate the filler in a larger amount in the composition of the present invention. Although the plasticizer may be any of those in general use, those having good compatibility with the saturated hydrocarbon polymer to be used in accordance with the present invention are preferred. As specific examples of the plasticizer, there maybe mentioned, among others, process oils, polybutene, hydrogenated polybutene, α-methylstyrene oligomers, liquid polybutadiene, hydrogenated liquid polybutadiene, paraffin oils, naphthene oils, isotactic polypropylene and the like. Among them, unsaturated bond-free hydrocarbon compounds, such as process oils, hydrogenated polybutene, hydrogenated liquid polybutadiene, paraffin oils and naphthene oils, are preferred.

In the curable composition of the present invention, there may also be used a hydrogenated α-olefin oligomer as a plasticizer for reducing the viscosity of the hydrocarbon polymer, which otherwise shows a high viscosity and is difficult to handle, to thereby render the same easy to handle and, further, for improving the extrudability and workability of the composition at low temperatures. The monomer unit or units of this hydrogenated α-olefin oligomer is not particularly restricted but includes α-olefins containing 4 to 18 carbon atoms, for example straight-chain α-olefins such as 1-butene, 1-hexene, 1-octene, 1-decene, 1-dodecene, 1-tetradecene, 1-hexadecene and 1-octadecene, and branched α-olefins such as 4-methyl-1-pentene. Among them, polymers of straight-chain α -olefins containing 8 to 12 carbon atoms, such as 1-octene, 1-decene and 1-dodecene, are preferred because of their low-temperature flowability. The number average molecular weight of the oligomer is not particularly restricted but is preferably within the range of 200 to 700. When the number average molecular weight is less than 200, the loss on heating is significant, so that the mechanical characteristics of the cured products may vary greatly with the lapse of time. When it is above 700, the compatibility will be poor, sometimes worsening the workability of the composition at low temperatures. The degree of polymerization of this oligomer is not particularly restricted but is preferably within the range of 1 to 10. If the degree

of polymerization exceeds 10, the compatibility will become inadequate so that the low-temperature workability of the composition may at times be adversely affected. The molecular weight distribution (ratio of weight average molecular weight Mw to number average molecular weight Mn; namely Mw/Mn) is not particularly restricted but is preferably within the range of 1 or 1.1. A polymer narrow in molecular weight distribution shows a high compatibility and a small loss on heating, hence is preferred. Further, the oligomer is preferably one hydrogenated after polymerization. Double bonds, if remaining in the oligomer, unfavorably worsen the heat resistance and weathering resistance of the composition of the invention.

As a hydrogenated $\alpha$-olefin oligomer satisfying the above requirements, there may more specifically be mentioned Idemitsu Petrochemical's PAO (Idemitsu poly-alpha-olefin).

In the curable composition of the present invention, there may further be incorporated, where necessary, other additives such as antiodixants, ultraviolet absorbers, light stabilizers, fire retardants, thixotropic agents, pigments and surfactants, each in an appropriate amount.

The composition of the present invention may take the form of a two-component composition or three- or more-component composition. In the case of two-component composition, the main composition comprising the component (A) of the invention supplemented, for instance, with a filler, plasticizer and so on, and the curing agent, namely component (B) of the invention, are prepared separately and, prior to use, they are mixed together. In this way, both components, even after a long period of storage, can stably provide cured products with the same physical properties as those initially obtainable.

The composition of the present invention is useful mainly as an elastomer-forming curable composition and can be used for sealing electronic and electric appliances, as a water seal in civil engineering, or as a sealant for use in buildings, ships, automobiles, roads and so on. Furthermore, the composition can be used as an adhesive composition of any of various types, since it firmly adheres to a wide variety of substrates, such as glass, stone, ceramics, wood, synthetic resins and metals, without the aid of a primer.

The curable composition of the present invention expresses long-lasting stable adhesiveness to float glass, various surface-treated heat-ray reflecting glass species, pure and anodized aluminum, etc. and therefore is particularly useful as a sealing material for double glazing or SSG.

BEST MODES FOR CARRYING OUT THE INVENTION

The following examples illustrate the invention in further detail. They are, however, by no means limitative of the scope of the invention.

Production Example 1

Production of a saturated hydrocarbon polymer

A one-liter pressure glass autoclave was charged with 7.5 mmol of p-DCC (compound A shown below) and after installation of a stirring impeller, a three-way cock and a vacuum line, the interior was purged with nitrogen.

Thereafter, with nitrogen gas being introduced into the autoclave from a branch of the three-way cock, solvents dehydrated by molecular sieve treatment, namely 330 ml of toluene and 141 ml of hexane, were introduced using a syringe, and 3.0 mmol of $\alpha$-picoline (additive) were then added.

Then, a pressure glass liquefied gas collecting tube equipped with a needle valve and containing 113 g of isobutylene dehydrated by passing through a barium oxide column was connected to the three-way cock. The vessel itself was then immersed in a dry ice-acetone bath at -70 °C and cooled for 1 hour while stirring the polymerization vessel contents. After cooling, the internal pressure was reduced by means of the vacuum line and the needle valve was then opened to feed the isobutylene into the polymerization vessel from the pressure glass liquefied gas collecting tube. Thereafter, the internal atmosphere of the vessel was returned to ordinary pressure by admitting nitrogen via a branch of the three-way cock.

Then, after confirming that the temperature within the polymerization vessel was steady at -70 °C, 7.18 g (3.8 mmol) of $TiCl_4$ were added through the three-way cock using a syringe, for initiating polymerization. After the lapse of 2 hours, 2.57 g (22.5 mmol) of allyltrimethylsilane were added. After a further one hour of reaction, the reaction mixture was poured into water to deactivate the catalyst. The organic layer was then washed with 3 portions of pure water. After phase separation, the solvents were distilled off under reduced pressure, whereupon an allyl-terminated isobutylene polymer was obtained.

The structure of the compound A is as shown below.

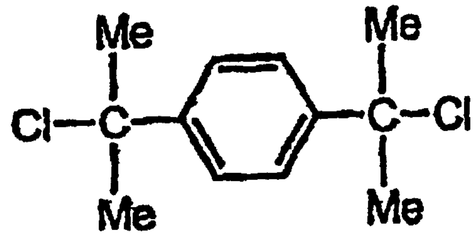

Then, 100 g of the thus-obtained allyl-terminated isobutylene polymer were dissolved in 50 ml of n-heptane and the solution was heated to about 70°C. Then, methyldimethoxysilane (1.2 eq/allyl group) and platinum-vinylsiloxane complex (1 × $10^{-4}$ eq/allyl group) were added and the hydrosilylation reaction was allowed to proceed. The reaction was monitored by FT-IR and, in about 4 hours, disappearance of the olefin-due absorption at 1640 $cm^{-1}$ was confirmed and the reaction was discontinued.

Concentration of the reaction mixture under reduced pressure gave the desired isobutylene polymer having the reactive silicon groups at both termini. It had the structure shown below.

The percent yield was calculated from the weight yield of the polymer obtained in the above manner while the Mn and Mw/Mn values were determined by the GPC technique and the terminal structure was determined by 300 MHz $^1$H-NMR analysis, i.e. by measuring and comparing the intensities of the resonance signals due to protons ascribable to respective structures (initiator-derived protons: 6.5 to 7.5 ppm; methyl protons bound to the polymer terminal-bound silicon atom: 0.0 to 0.1 ppm; and methoxy protons: 3.5 to 3.4 ppm). The values found for the polymer were as follows: Mn = 11,416, Mn/Mw = 1.47, Fn (silyl) = 1.95 (the number average molecular weight being a relative value obtained by using polystyrene standards; Fn (silyl) being the number of terminal silyl functions per isobutylene polymer molecule).

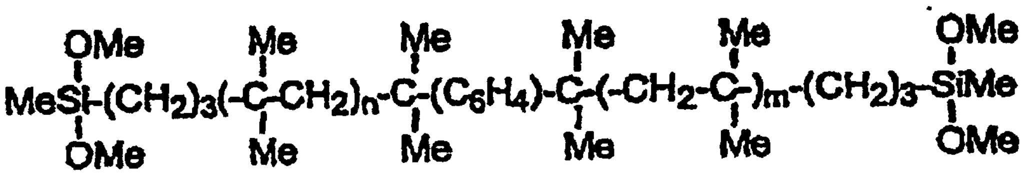

Example 1 and Comparative Example 1

To 100 parts of the polymer obtained in Production Example 1 were added 90 parts of a paraffin-based process oil (product of Idemitsu Kosan; trademark Diana Process Oil PS-32), 180 parts of ground calcium carbonate (product of Shiraishi Calcium; tradmark Lighton A), 50 parts of precipitated calcium carbonate (product of Shiraishi Kogyo; trademark Hakuenka CC), 100 parts of talc (product of Maruo Calcium; trademark LMR), 1 part of an antioxidant (product of Ciba-Geigy; trademark Irganox 1010), 1 part (product of Sumitomo Chemical; trademark Sumisorb 400), 1 part (product of Sankyo; trademark Sanol LS-765), 3 parts of a light stabilizer (product of Sanshin Chemical; trademark Sandant NBC), 3 parts of a light-curing resin (product of Toagosei; trademark Aronix M400), 2 parts of a thixotropic agent (product of Kusumoto Kasei; trademark Disparlon #305), 3 parts of γ-glycidoxypropyltrimethoxysilane (silane coupling agent; product of Nippon Unicar; trademark A-187) and 6 parts of γ -isocyanatopropyltriethoxysilane (product of Nippon Unicar; trademark A-1310), and the resulting mixture was thoroughly kneaded on a three-roll paint mill to give the main composition of Example 1.

Separately, the curing agent of Example 1 was prepared. Thus, 10 parts of moisture-containing zeolite were prepared in advance by admixing 6 parts of zeolite 3A (product of Wako Pure Chemical) with 4 parts of water (deionized water) . To this were added 4 parts of dibutyltin dimethoxide (silanol condensation catalyst; product of Aldrich Chemical), 16 parts of a paraffin-based process oil (product of Idemitsu Kosan; trademark Diana Process Oil PS-32), 10 parts of ground calcium carbonate (product of Maruo Calcium; trademark Snowlite SS) and 2.5 parts of carbon black (product of Mitsubishi Chemical; trademark CB #30). After kneading in a disposable cup, the mixture was homogenized by three repetitions of 10-minute stirring-at a speed of 10,000 rpm using a Nippon Seiki Seisakusho Excel Auto homogenizer.

Further, in Comparative Example 1, the same main composition as that of Example 1 was used, while the curing agent was prepared in the same manner as in Example 1 except that 4 parts of water (deionized water) were added as the water source for the curing agent in lieu of the moisture-containing zeolite.

Specimens for tensile testing were prepared by the following procedure. First, float glass pieces were assembled in the form of H according to the method of preparing test specimens for tensile bond strength testing as prescribed in JIS A 5758-1992. The above main composition and curing agent were weighed out in a ratio corresponding to the ratio of the sum of numbers of parts of the main composition components to the sum of numbers of parts of the curing agent components, and thoroughly kneaded together. The resulting compound was then filled into the H-shaped assemblies and cured in a constant-temperature room maintained at a temperature of 23 °C and a humidity of 65 ± 5%. The substrates used in the H shape tensile test were float glass sheets (product of Koensha; designated by the Japan Society of Sealing Materials Industry; size: 5 × 5 × 0.5 cm). The adherends were rinsed with methyl ethyl ketone (product of Wako Pure Chemical; special grade) and wiped with clean cotton cloth prior to filling of the compound.

The H-shaped test specimens for tensile testing as prepared above were subjected to tensile bond strength testing according to the method of JIS A 5758-1992 immediately after specimen preparation and 2 hours, 4 hours, 6 hours and 24 hours thereafter, in a constant-temperature room maintained at a temperature of 23 °C and a relative humidity of 65 ± 5% at test speed 50 mm/min. The data obtained in Example 1 are shown in Table 1, and the data obtained in Comparative Example 1 are shown in Table 2. In the tables, the percentage values of cohesive failure (CF), thin layer cohesive failure (TCF) and adhesive failure (AF) are the percentages estimated by macroscopic observation of fracture surfaces after tensile testing.

Table 1

| Ex. 1 | | 50% Tensile stress M50 (kgf/$cm^2$) | Maximum Tensile Stress Tmax (kgf/$cm^2$) | Elongation at maximum load Emax (%) | Mode of failure (%) | | |
|---|---|---|---|---|---|---|---|
| | | | | | CF | TCF | AF |
| After 2 hrs | 1 | 1.41 | 2.76 | 177 | 80 | 10 | 10 |
| | 2 | 1.48 | 2.92 | 172 | 95 | 5 | 0 |
| | Mean | 1.45 | 2.84 | 174 | 88 | 8 | 5 |
| After 4 hrs | 1 | 3.46 | 5.37 | 125 | 100 | 0 | 0 |
| | 2 | 3.45 | 5.42 | 127 | 95 | 5 | 0 |
| | Mean | 3.46 | 5.39 | 126 | 98 | 3 | 0 |
| After 6 hrs | 1 | 3.97 | 5.22 | 100 | 100 | 0 | 0 |
| | 2 | 3.97 | 5.89 | 118 | 100 | 0 | 0 |
| | Mean | 3.92 | 5.55 | 109 | 100 | 0 | 0 |
| After 24 hrs | 1 | 5.17 | 6.33 | 84 | 100 | 0 | 0 |
| | 2 | 5.12 | 6.52 | 88 | 100 | 0 | 0 |
| | Mean | 5.15 | 6.43 | 86 | 100 | 0 | 0 |
| After STD Curing | 1 | 6.77 | 7.78 | 68 | 100 | 0 | 0 |
| | 2 | 6.96 | 8.41 | 73 | 100 | 0 | 0 |
| | Mean | 6.86 | 8.09 | 71 | 100 | 0 | 0 |

Table 2

| Compar. Ex. 1 | | 50% Tensile stress M50 (kgf/$cm^2$) | Maximum tensile stress Tmax (kgf/$cm^2$) | Elongation at maximum load Emax (%) | Mode of failure (%) | | |
|---|---|---|---|---|---|---|---|
| | | | | | CF | TCF | AF |
| After 2 hrs | 1 | - | 0.99 | 18 | 0 | 0 | 100 |
| | 2 | - | 1.01 | 20 | 0 | 0 | 100 |
| | Mean | - | 1.00 | 19 | 0 | 0 | 100 |

Table 2 (continued)

| Compar. Ex. 1 | | 50% Tensile stress M50 ($kgf/cm^2$) | Maximum tensile stress Tmax ($kgf/cm^2$) | Elongation at maximum load Emax (%) | Mode of failure (%) | | |
|---|---|---|---|---|---|---|---|
| | | | | | CF | TCF | AF |
| After 4 hrs | 1 | - | 1.71 | 21 | 0 | 0 | 100 |
| | 2 | - | 2.11 | 27 | 0 | 0 | 100 |
| | Mean | - | 1.91 | 24 | 0 | 0 | 100 |
| After 6 hrs | 1 | - | 3.52 | 46 | 0 | 0 | 100 |
| | 2 | 3.95 | 4.11 | 55 | 0 | 0 | 100 |
| | Mean | (3.95) | 3.81 | 50 | 0 | 0 | 100 |
| After 24 hrs | 1 | 4.59 | 6.18 | 102 | 100 | 0 | 0 |
| | 2 | 4.66 | 6.22 | 101 | 100 | 0 | 0 |
| | Mean | 4.63 | 6.20 | 102 | 100 | 0 | 0 |
| After STD curing | 1 | 7.13 | 8.61 | 71 | 95 | 5 | 0 |
| | 2 | 7.11 | 8.66 | 70 | 100 | 0 | 0 |
| | Mean | 7.12 | 8.64 | 71 | 98 | 3 | 0 |

As shown in Tables 1 and 2, the compound of Example 1 showed good adhesion to float glass (maximum tensile stress: about 3 $kg/cm^2$; cohesive failure) at 2 hours after specimen preparation whereas, in Comparative Example 1, the adhesion to the same float glass was poor at 2 hours after specimen preparation (maximum tensile stress: about 1 $kg/cm^2$; adhesive failure) and it was only after 24 hours that cohesive failure was observed. It can also be seen that whereas, in Example 1, about 70% of the tensile stress after standard curing (STD curing) was attained already after 6 hours of curing, the tensile stress after 6 hours of curing in Comparative Example 1 was only about 40%.

Example 2 and Comparative Example 2

The same main composition and curing agent as used in Example 1 were used in Example 2, and the same compound as used in Comparative Example 1 was used in Comparative Example 2.

Test specimens for tensile testing were prepared by the same procedure as described in Example 1. The curing conditions for cured products were those of standard curing (7 days of curing in a constant-temperature room at a temperature of 23 °C and a humidity of 65 ± 5%, followed by 7 days of curing in an oven at 50). The substrates used in the H-tensile test were float glass sheets meeting the requirements of JIS A 5758-1992 (products of Koensha; designated by the Japan Society of Sealing Materials Industry; size: 5 × 5 × 0.5 cm). The adherends were rinsed with methyl ethyl ketone (product of Wako Pure Chemical; special grade) and wiped with clean cotton cloth prior to filling of the compound.

The H-shaped test specimens for tensile testing as prepared in the above manner were subjected to tensile bond strength testing according to the method of JIS A 5758-1992 immediately after curing and after 5 (or 7) and 14 days of immersion in hot water at 80 °C, in a constant-temperature room maintained at a temperature of 23 °C and a humidity of 65 ± 5% at test speed 50 mm/min. The results thus obtained are shown in Table 3.

Table 3

| No. | Day of testing | | 50% Tensile stress M50 (kgf/cm²) | Maximum tensile stress Tmax (kgf/cm²) | Elongation at maximum load Emax (%) | Mode of failure (%) | | |
|---|---|---|---|---|---|---|---|---|
| | | | | | | CF | TCF | AF |
| Ex. 2 | Initial | 1 | 6.66 | 8.48 | 72 | 100 | 0 | 0 |
| | | 2 | 6.56 | 8.08 | 77 | 100 | 0 | 0 |
| | | Mean | 6.61 | 8.28 | 75 | 100 | 0 | 0 |
| | After 7 days | 1 | 4.77 | 6.67 | 99 | 95 | 0 | 5 |
| | | 2 | 4.80 | 6.86 | 95 | 100 | 0 | 0 |
| | | Mean | 4.79 | 6.77 | 97 | 98 | 0 | 3 |
| | After 14 days | 1 | 4.55 | 6.27 | 92 | 98 | 0 | 2 |
| | | 2 | 4.76 | 6.46 | 91 | 98 | 0 | 2 |
| | | Mean | 4.66 | 6.37 | 92 | 98 | 0 | 2 |
| Compar. Ex. 2 | Initial | 1 | 7.13 | 8.61 | 71 | 95 | 5 | 0 |
| | | 2 | 7.11 | 8.66 | 70 | 100 | 0 | 0 |
| | | Mean | 7.12 | 8.63 | 71 | 98 | 3 | 0 |
| | After 5 days | 1 | 5.88 | 6.69 | 65 | 92 | 5 | 3 |
| | | 2 | 5.44 | 6.44 | 72 | 97 | 0 | 3 |
| | | Mean | 5.66 | 6.57 | 68 | 95 | 3 | 3 |
| | After 14 days | 1 | 5.89 | 6.03 | 62 | 90 | 0 | 10 |
| | | 2 | 5.51 | 5.55 | 52 | 90 | 0 | 10 |
| | | Mean | 5.70 | 5.79 | 57 | 90 | 0 | 10 |

As shown in Table 3, after 14 days of immersion in hot water at 80 °C, both lots of test specimens of Example 2 showed good adhesion (cohesive failure) to float glass, and the maximum tensile stress retention as compared with the initial value was 67% in Comparative Example 2 and 77% in Example 2. Thus, in Example 2, an improvement in the resistance of adhesion to hot water was confirmed.

Example 3 and Example 4

compounds were prepared using the same main composition as used in Example 1 and, for the curing agent, using zeolite 4A (product of Wako Pure Chemical) in Example 3 or zeolite 13X (product of Wako Pure Chemical) in Example 4 in lieu of the zeolite species used in Examples 1 and 2.

Test specimens for tensile testing were prepared by the same procedure as described in Example 1. Just as in Example 2, the H-shaped test specimens for tensile testing were subjected to tensile bond strength testing according to the method of JIS A 5758-1992 immediately after curing and after 7, 14 and 35 days of immersion in hot water at 80 °C, in a constant-temperature room maintained at a temperature of 23 °C and a humidity of 65 ± 5% at test speed 50 mm/min. The results thus obtained are shown in Table 4.

Table 4

| Ex. | Day of testing | | 50% Tensile stress M50 ($kgf/cm^2$) | Maximum tensile stress Tmax ($kgf/cm^2$) | Elongation at maximum load Emax (%) | Mode of failure (%) CF | TCF | AF |
|---|---|---|---|---|---|---|---|---|
| Ex. 3 | Initial | 1 | 7.64 | 9.16 | 70 | 100 | 0 | 0 |
| | | 2 | 7.57 | 9.17 | 71 | 100 | 0 | 0 |
| | | Mean | 7.60 | 9.16 | 70 | 100 | 0 | 0 |
| | After 7 days | 1 | 5.64 | 7.25 | 79 | 95 | 5 | 0 |
| | | 2 | 5.52 | 7.28 | 82 | 95 | 5 | 0 |
| | | Mean | 5.58 | 7.27 | 81 | 95 | 5 | 0 |
| | After 14 days | 1 | 4.96 | 6.01 | 70 | 75 | 20 | 5 |
| | | 2 | 5.39 | 7.24 | 83 | 80 | 15 | 5 |
| | | Mean | 5.17 | 6.62 | 77 | 78 | 18 | 5 |
| Ex. 4 | Initial | 1 | 7.21 | 8.90 | 74 | 100 | 0 | 0 |
| | | 2 | 7.16 | 8.61 | 70 | 100 | 0 | 0 |
| | | Mean | 7.19 | 8.75 | 72 | 100 | 0 | 0 |
| | After 7 days | 1 | 5.26 | 6.58 | 75 | 100 | 0 | 0 |
| | | 2 | 5.53 | 7.13 | 79 | 90 | 10 | 0 |
| | | Mean | 5.39 | 6.85 | 77 | 95 | 5 | 0 |
| | After 14 days | 1 | 5.43 | 7.05 | 79 | 85 | 10 | 5 |
| | | 2 | 5.35 | 6.61 | 73 | 83 | 15 | 2 |
| | | Mean | 5.39 | 6.83 | 76 | 84 | 13 | 4 |

As shown in Table 4, in both of Example 3 and Example 4, the adhesion to float glass after 14 days of immersion in hot water at 80 °C was good (cohesive failure). As regards the maximum tensile stress retention compared with the initial value, the retention in Example 3 was 72% and that in Example 4 was 78%. Thus, improvements were obtained in the resistance of adhesion to hot water in comparison with that of Comparative Example 2. From the results of Examples 2 to 4, it was further confirmed that good adhesion resistance to water can be developed irrespective of zeolite species.

Example 5

Thus, 34 parts of moisture-containing zeolite was prepared by mixing 30 parts of zeolite 3A (product of Wako Pure Chemical) with 4 parts of water (deionized water). To this were added 4 parts of dibutyltin dimethoxide (silanol condensation catalyst; product of Aldrich Chemical), 16 parts of a paraffin-based process oil (product of Idemitsu Kosan; trademark Diana Process Oil PS-32), 10 parts of ground calcium carbonate (product of Maruo Calcium; trademark Snowlite SS) and 2.5 parts of carbon black (product of Mitsubishi Chemical; trademark CB #30). After manual kneading in a disposable cup, the mixture was homogenized by three repetitions of 10-minute stirring at a speed of 10, 000 rpm using a Nippon Seiki Seisakusho Excel Auto homogenizer. The curing agent of Example 5 was prepared by the above-mentioned process. As for the main composition, the same composition as used in Example 1 was used. The main composition and curing agent were weighed out in a ratio corresponding to the ratio of the sum of numbers of parts of the main composition components to the sum of numbers of parts of the curing agent components, and thoroughly kneaded together to give a sealing material (S1).

First, as shown in Fig. 1, two 5-mm-thick glass sheets were prepared and a 6-mm-wide strip of stainless steel wire netting (a mesh size: about 1 mm), as a spacer (for maintaining the two glass sheets at a distance from each other), was interposed between the glass sheets 5 mm away from the sheet edges. Then, the above sealing material (S1) was filled into the bracket-shaped space defined by the wire netting and glass sheet edges and cured at room temperature for 1 week.

Using the above double glazing structure, the dew point was determined by the method of JIS R 3209 and found to be not higher than -70 °C. It was thus demonstrated that the above structure can satisfactorily function as double glazing and that the drying agent kneaded into the above material adsorbs moisture in the air shifting into the

double glazing to thereby dry said air.

Example 6

The main composition of Example 6 was prepared by mixing 100 parts of the polymer obtained in Production Example 1 with 87 parts of a paraffin-based process oil (product of Idemitsu Kosan; trademark Diana Process Oil PS-32), 171 parts of ground calcium carbonate (product of Shiraishi Calcium; tradmark Lighton A), 48 parts of precipitated calcium carbonate (product of Shiraishi Kogyo; trademark Hakuenka CC), 95 parts of talc (product of Maruo Calcium; trademark LMR), 3 parts of a light stabilizer (product of Sanshin Chemical; trademark Sandant NBC), 3 parts of a light-curing resin (product of Toagosei; trademark Aronix M400), 2 parts of a thixotropic agent (product of Kusumoto Kasei; trademark Disparlon #305), 3 parts of γ-glycidoxypropyltrimethoxysilane (silane coupling agent; product of Nippon Unicar; trademark A-187) and 6 parts of 3-phenylaminopropyltrimethoxysilane (silane coupling agent; product of Nippon Unicar; trademark Y-9669), and the resulting mixture was thoroughly kneaded on a three-roll paint mill.

Moisture-containing zeolite (10 parts) was prepared in advance by admixing 6 parts of zeolite 3A (product of Wako Pure Chemical) with 4 parts of water (deionizedwater). To this were added 4 parts of dibutyltin dimethoxide (silanol condensation catalyst; product of Aldrich Chemical), 15 parts of a paraffin-based process oil (product of Idemitsu Kosan; trademark Diana Process Oil PS-32), 10 parts of ground calcium carbonate [product of Maruo Calcium; trademark Snowlite SS) and 2 parts of carbon black (product of Mitsubishi Chemical; trademark CB #30). After kneading in a disposable cup, the mixture was homogenized by three repetitions of 10-minute stirring at a speed of 10, 000 rpm using a Nippon Seiki Seisakusho Excel Auto homogenizer. By the above-mentioned process, the curing agent of Example 6 was prepared.

Specimens for tensile testing were prepared by the following procedure. First, float glass pieces were assembled in the form of H according to the method of preparing test specimens for tensile bond strength testing as prescribed in JIS A 5758-1992. The above main composition and curing agent were weighed out in a ratio corresponding to the ratio of the sum of numbers of parts of the main composition components to the sum of numbers of parts of the curing agent components, and thoroughly kneaded together. The resulting compound was then filled into the H-shaped assemblies and cured in a constant-temperature room maintained at a temperature of 23 °C and a humidity of 65 ± 5%. The substrates used in the H-tensile test were float glass sheets meeting the requirements of JIS A 5758-1992 (product of Koensha; designated by the Japan Society of Sealing Materials Industry; size: 5 × 5 × 0.5 cm). The adherends were rinsed with methyl ethyl ketone (product of Wako Pure Chemical; special grade) and wiped with clean cotton cloth prior to filling of the compound.

Curing was conducted under standard curing conditions (7 days in a constant-temperature room maintained at a temperature of 23 °C and a humidity of 65 ± 5% and 7 days in an oven at 50 °C).

The H-shaped test specimens for tensile testing as prepared in the above manner were subjected to tensile bond strength testing according to the method of JIS A 5758-1992 immediately after curing, before and after 7, 15 and 35 days of immersion in hot water at 80 °C, in a constant-temperature room maintained at a temperature of 23 °C and a humidity of 65 ± 5% at test speed 50 mm/min. The results obtained are shown in Table 5.

Table 5

| | Number of days | | M50 1)(MPa) | Tmax 2) (MPa) | Emax 3) (%) | Mode of failure (%) | | |
|---|---|---|---|---|---|---|---|---|
| | | | | | | CF | TCF | AF |
| Ex. 6 | 0 | 1 | 0.49 | 0.69 | 85 | 100 | 0 | 0 |
| | | 2 | 0.50 | 0.66 | 81 | 100 | 0 | 0 |
| | | Mean | 0.49 | 0.67 | 83 | 100 | 0 | 0 |
| | 7 | 1 | 0.49 | 0.63 | 81 | 100 | 0 | 0 |
| | | 2 | 0.49 | 0.62 | 79 | 100 | 0 | 0 |
| | | Mean | 0.49 | 0.63 | 80 | 100 | 0 | 0 |
| | 15 | 1 | 0.51 | 0.61 | 71 | 100 | 0 | 0 |
| | | 2 | 0.50 | 0.60 | 71 | 100 | 0 | 0 |
| | | Mean | 0.50 | 0.60 | 71 | 100 | 0 | 0 |
| | 35 | 1 | 0.46 | 0.50 | 61 | 80 | 0 | 20 |
| | | 2 | 0.47 | 0.49 | 57 | 80 | 0 | 20 |
| | | Mean | 0.47 | 0.50 | 59 | 80 | 0 | 20 |
| Curing conditions: 23 °C × 7 days + 50 °C × 7 days<br>Substrate: float glass | | | | | | | | |

1) 50% Modulus (MPa)
2) Maximum tensile stress (MPa)
3) Elongation at maximum load (%)

As shown in Table 5, both groups of cured products in Example 6 showed good adhesion (cohesive failure) to float glass after 36 days following immersion in hot water at 80 °C and, thus, proved to have good resistance of adhesion to hot water.

The H-shaped test specimens for tensile testing as prepared in the above manner were subjected to tensile bond strength testing according to the method of JIS A 5758-1992 immediately after specimen preparation, after 3, 4 and 6 hours of curing, and after standard curing, in a constant-temperature room maintained at a temperature of 23 °C and a humidity of 65 ± 5% at test speed 50 mm/min. The results obtained in Example 6 are shown in Table 6. In the table, the percentage values of cohesive failure (CF), thin layer cohesive failure (TCF) and adhesive failure (AF) are the values estimated by macroscopic observation of fracture surfaces after tensile testing.

Table 6

| | | Example 6 | | | | | |
|---|---|---|---|---|---|---|---|
| Period of curing (hrs) | | M50 1) (MPa) | Tmax 2) (MPa) | Emx 3) (%) | Mode of failure (%) | | |
| | | | | | CF | TCF | AF |
| 3 | 1 | 0.14 | 0.29 | 173 | 80 | 0 | 20 |
| | 2 | 0.13 | 0.29 | 186 | 80 | 0 | 20 |
| | Mean | 0.13 | 0.29 | 180 | 80 | 0 | 20 |
| 4 | 1 | 0.23 | 0.45 | 158 | 85 | 0 | 15 |
| | 2 | 0.24 | 0.46 | 157 | 98 | 0 | 2 |
| | Mean | 0.23 | 0.46 | 157 | 92 | 0 | 9 |
| 6 | 1 | 0.34 | 0.58 | 139 | 95 | 0 | 5 |
| | 2 | 0.33 | 0.55 | 129 | 90 | 0 | 10 |
| | Mean | 0.33 | 0.57 | 134 | 93 | 0 | 8 |

Table 6 (continued)

| | | Example 6 | | | | | |
|---|---|---|---|---|---|---|---|
| Period of curing (hrs) | | M50[1)] (MPa) | Tmax[2)] (MPa) | Emx[3)] (%) | Mode of failure (%) | | |
| | | | | | CF | TCF | AF |
| After standard curing | 1 | 0.53 | 0.66 | 74 | 100 | 0 | 0 |
| | 2 | 0.52 | 0.63 | 72 | 100 | 0 | 0 |
| | Mean | 0.53 | 0.64 | 73 | 100 | 0 | 0 |

In Example 6, as shown in Table 6, good adhesion (maximum tensile stress: about 3 $kg/cm^2$; cohesive failure) to float glass was observed at 3 hours after specimen preparation and it could be confirmed that, in zeolite-containing systems, sufficient bond strength can be attained at an early stage in spite of the use of different kinds of adhesion promoters.

INDUSTRIAL APPLICABILITY

The composition of the present invention, in which a water-containing drying agent is used as the water source, can be prepared with ease as compared with the use of metal salt hydrates in compounding and, with this composition, the rate of curing in the presence of a silanol condensation catalyst is accelerated as compared with the case of water being used as the water source and, further, the resistance of adhesion to hot water is advantageously improved.

## Claims

**1.** A curable composition

which comprises at least two components,

namely (A) a main component comprising a saturated hydrocarbon polymer having at least one silicon-containing group, said silicon-containing group containing a silicon atom-bound hydroxy group or hydrolyzable group and being able to be crosslinked under formation of a siloxane bond,

and (B) a curing agent comprising (b1) a silanol condensation catalyst and (b2) a moisture-containing drying agent other than a metal salt hydrate.

**2.** The curable composition according to Claim 1,

wherein the saturated hydrocarbon polymer in the main component (A) is an isobutylene-based polymer.

**3.** The curable composition according to Claim 1 or 2,

wherein the silicon-containing group containing a silicon atom-bound hydroxy group or hydrolyzable group and being able to be crosslinked under formation of a siloxane bond in the main component (A) has, per molecule, not less than one hydrolyzable silyl group represented by the general formula (1):

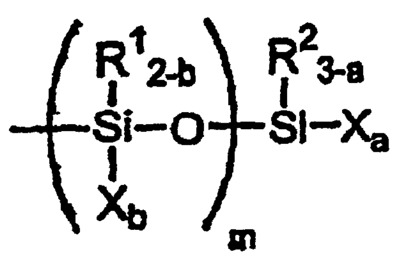

(1)

wherein $R^1$ and $R^2$ each independently is a hydrogen atom, an alkyl group containing 1 to 20 carbon atoms, an aryl group containing 6 to 20 carbon atoms, an aralkyl group containing 7 to 20 carbon atoms or a triorganosiloxy group of the formula $(R')_3SiO$-, in which each R' independently is a substituted or unsubstituted monovalent hydrocarbon group containing 1 to 20 carbon atoms; X is a hydroxy group or hydrolyzable group and when there are

a plurality of X's, they may be the same or different; a is 0, 1, 2 or 3 and b is 0, 1 or 2, to the exclusion of the case that a and b are simultaneously 0; and m is an integer of 0 to 19.

**4.** The curable composition according to Claim 3,
wherein X is an alkoxy group.

**5.** The curable composition according to any of Claims 1 to 4,
wherein the silanol condensation catalyst (b1) in the curing agent component (B) is a compound of tetravalent tin.

**6.** The curable composition according to Claim 5,
wherein the compound of tetravalent tin is a dialkyltin dialkoxide.

**7.** The curable composition according to any of Claims 1 to 6,
wherein the drying agent (b2) in the curing agent component (B) is zeolite.

**8.** The curable composition according to any of Claims 1 to 7,
wherein the saturated hydrocarbon polymer in the main component (A) is an isobutylene-based polymer and the silanol condensation catalyst (b1) in the curing agent component (B) is a compound of tetravalent tin.

**9.** The curable composition according to any of Claims 1 to 8,
wherein the main component (A) comprises a silane coupling agent.

**10.** The curable composition according to Claim 9,
wherein the silane coupling agent has (a) a silicon-containing group containing a silicon atom-bound hydrolyzable group and (b) at least one group selected from the group consisting of primary amino, secondary amino, tertiary amino, epoxy, isocyanato and isocyanurate groups.

**11.** The curable composition according to Claim 9,
wherein the saturated hydrocarbon polymer in the main component (A) is an isobutylene-based polymer,
the silanol condensation catalyst (b1) in the curing agent component (B) is a compound of tetravalent tin
and the silane coupling agent in the main component (A) has (a) a silicon-containing group containing a silicon atom-bound hydrolyzable group and (b) at least one group selected from the group consisting of primary amino, secondary amino, tertiary amino, epoxy, isocyanato and isocyanurate groups.

## Patentansprüche

**1.** Härtbare Zusammensetzung, welche mindestens zwei Bestandteile umfaßt, nämlich

(A) einen Hauptbestandteil, umfassend ein gesättigtes Kohlenwasserstoff-Polymer mit mindestens einem Silicium-enthaltenden Rest, wobei der Siliciumenthaltende Rest eine an ein Siliciumatom gebundene Hydroxygruppe oder hydrolysierbare Gruppe enthält und in der Lage ist, unter Bildung einer Siloxanbindung, vernetzt zu werden, und
(B) ein Härtungsmittel umfassend (b1) einen Silanol-Kondensationskatalysator und (b2) ein Feuchtigkeit-enthaltendes Trockenmittel, welches nicht ein Hydrat eines Metallsalzes ist.

**2.** Härtbare Zusammensetzung gemäß Anspruch 1, wobei das gesättigte Kohlenwasserstoff-Polymer in dem Hauptbestandteil (A) ein Polymer auf Isobutylen-Basis ist.

**3.** Härtbare Zusammensetzung gemäß Anspruch 1 oder 2, wobei der Siliciumenthaltende Rest, welcher eine an ein Siliciumatom gebundene Hydroxygruppe oder hydrolysierbare Gruppe enthält und in der Lage ist, unter Bildung einer Siloxanbindung, vernetzt zu werden, in dem Hauptbestandteil (A) pro Molekül nicht weniger als eine hydrolysierbare Silylgruppe der allgemeinen Formel (1) aufweist

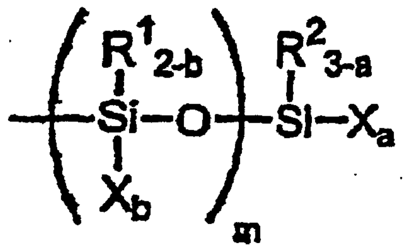

(1)

wobei $R^1$ und $R^2$ jeweils unabhängig voneinander ein Wasserstoffatom, ein Alkylrest mit 1 bis 20 Kohlenstoffatomen, ein Arylrest mit 6 bis 20 Kohlenstoffatomen, ein Aralkylrest mit 7 bis 20 Kohlenstoffatomen oder ein Triorganosiloxyrest der Formel $(R')_3SiO$- ist, in der R' jeweils unabhängig voneinander ein substituierter oder unsubstituierter monovalenter Kohlenwasserstoffrest mit 1 bis 20 Kohlenstoffatomen ist; X eine Hydroxygruppe oder hydrolysierbare Gruppe ist und wenn mehrere Reste X vorhanden sind, diese gleich oder verschieden sein können; a gleich 0, 1, 2 oder 3 ist und b gleich 0, 1 oder 2 ist, wobei a und b nicht gleichzeitig 0 sein können; und m eine ganze Zahl von 0 bis 19 ist.

**4.** Härtbare Zusammensetzung gemäß Anspruch 3, wobei X ein Alkoxyrest ist.

**5.** Härtbare Zusammensetzung gemäß einem der Ansprüche 1 bis 4, wobei der Silanol-Kondensationskatalysator (b1) in dem Härtungsmittel (B) eine Verbindung von vierwertigem Zinn ist.

**6.** Härtbare Zusammensetzung gemäß Anspruch 5, wobei die Verbindung von vierwertigem Zinn ein Dialkylzinndialkoxid ist.

**7.** Härtbare Zusammensetzung gemäß einem der Ansprüche 1 bis 6, wobei das Trockenmittel (b2) in dem Härtungsmittel (B) ein Zeolith ist.

**8.** Härtbare Zusammensetzung gemäß einem der Ansprüche 1 bis 7, wobei das gesättigte Kohlenwasserstoff-Polymer in dem Hauptbestandteil (A) ein Polymer auf Isobutylen-Basis ist und der Silanol-Kondensationskatalysator (b1) in dem Härtungsmittel (B) eine Verbindung von vierwertigem Zinn ist.

**9.** Härtbare Zusammensetzung gemäß einem der Ansprüche 1 bis 8, wobei der Hauptbestandteil (A) ein Silan-Kupplungsmittel umfaßt.

**10.** Härtbare Zusammensetzung gemäß Anspruch 9, wobei das Silan-Kupplungsmittel (a) einen Silicium-enthaltenden Rest, welcher eine an ein Siliciumatom gebundene hydrolysierbare Gruppe enthält, und (b) mindestens einen Rest, ausgewählt aus einem primären Amin-, sekundären Amin-, tertiären Amin-, Epoxy-, Isocyanat- und Isocyanurat-Rest, aufweist.

**11.** Härtbare Zusammensetzung gemäß Anspruch 9, wobei das gesättigte Kohlenwasserstoff-Polymer in dem Hauptbestandteil (A) ein Polymer auf Isobutylen-Basis ist, der Silanol-Kondensationskatalysator (b1) in dem Härtungsmittel (B) eine Verbindung von vierwertigem Zinn ist,
und das Silan-Kupplungsmittel in dem Hauptbestandteil (A) (a) einen Silicium-enthaltenden Rest, welcher eine an ein Siliciumatom gebundene hydrolysierbare Gruppe enthält, und (b) mindestens einen Rest, ausgewählt aus einem primären Amin-, sekundären Amin-, tertiären Amin-, Epoxy-, Isocyanat- und Isocyanurat-Rest, aufweist.

## Revendications

**1.** Composition durcissable qui comprend au moins deux composants,
à savoir (A) un composant principal comprenant un polymère hydrocarboné saturé ayant au moins un groupe contenant du silicium, ledit groupe contenant du silicium contenant un groupe hydroxyle ou un groupe hydrolysable lié à un atome de silicium et pouvant être réticulé avec formation d'une liaison siloxane,
et (B) un agent de durcissement comprenant (b1) un catalyseur de condensation de silanol et (b2) un agent desséchant contenant de l'humidité différent d'un sel métallique hydraté.

2. Composition durcissable selon la revendication 1, où le polymère hydrocarboné saturé dans le composant principal (A) est un polymère à base d'isobutylène.

3. Composition durcissable selon la revendication 1 ou 2, où le groupe contenant du silicium contenant un groupe hydroxyle ou un groupe hydrolysable lié à un atome de silicium et pouvant être réticulé avec formation d'une liaison siloxane dans le composant principal (A) a, par molécule, au moins un groupe silyle hydrolysable représenté par la formule générale (1) :

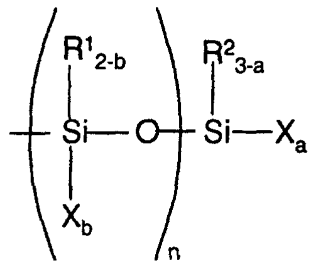
(1)

où $R^1$ et $R^2$ sont chacun indépendamment un atome d'hydrogène, un groupe alkyle contenant 1 à 20 atomes de carbone, un groupe aryle contenant 6 à 20 atomes de carbone, un groupe aralkyle contenant 7 à 20 atomes de carbone ou un groupe triorganosiloxy de formule $(R')_3SiO$- où chaque R' est indépendamment un groupe hydrocarboné monovalent substitué ou non substitué contenant 1 à 20 atomes de carbone ; X est un groupe hydroxyle ou un groupe hydrolysable et quand il y a une pluralité de X, ils peuvent être identiques ou différents ; a est 0, 1, 2 ou 3 et b est 0, 1 ou 2, à l'exclusion du cas où a et b sont simultanément 0 ; et m est un entier de 0 à 19.

4. Composition durcissable selon la revendication 3, où X est un groupe alcoxy.

5. Composition durcissable selon l'une quelconque des revendications 1 à 4, où le catalyseur de condensation de silanol (b1) dans le composant agent de durcissement (B) est un composé de l'étain tétravalent.

6. Composition durcissable selon la revendication 5, où le composé de l'étain tétravalent est un dialcoolate de dialkylétain.

7. Composition durcissable selon l'une quelconque des revendications 1 à 6, où l'agent desséchant (b2) dans le composant agent de durcissement (B) est une zéolite.

8. Composition durcissable selon l'une quelconque des revendications 1 à 7, où le polymère hydrocarboné saturé dans le composant principal (A) est un polymère à base d'isobutylène et le catalyseur de condensation de silanol (b1) dans le composant agent de durcissement (B) est un composé de l'étain tétravalent.

9. Composition durcissable selon l'une quelconque des revendications 1 à 8, où le composant principal (A) comprend un agent de couplage silane.

10. Composition durcissable selon la revendication 9, où l'agent de couplage silane a (a) un groupe contenant du silicium contenant un groupe hydrolysable lié à un atome de silicium et (b) au moins un groupe choisi dans le groupe consistant en les groupes amino primaire, amino secondaire, amino tertiaire, époxy, isocyanato et isocyanurate.

11. Composition durcissable selon la revendication 9, où le polymère hydrocarboné saturé dans le composant principal (A) est un polymère à base d'isobutylène,

le catalyseur de condensation de silanol (b1) dans le composant agent de durcissement (B) est un composé de l'étain tétravalent,

et l'agent de couplage silane dans le composant principal (A) a (a) un groupe contenant du silicium contenant un groupe hydrolysable lié à un atome de silicium et (b) au moins un groupe choisi dans le groupe consistant en les groupes amino primaire, amino secondaire, amino tertiaire, époxy, isocyanato et isocyanurate.

Fig. 1